# EUROPÄISCHE PATENTANMELDUNG

(11) **EP 1 054 237 A2**
(43) Veröffentlichungstag der Anmeldung: **22.11.2000**
(21) Anmeldenummer: 00110495.9
(22) Anmeldetag: 17.05.2000
(51) Int. Cl.: G01D 5/14

(54) **Drehwinkelsensor**

(30) Priorität: 17.05.1999 DE 29908409 U; 27.05.1999 DE 29909201 U; 15.02.2000 DE 20002719 U; 28.02.2000 DE 20003512 U
(71) Anmelder: AB Elektronik GmbH, 59368 Werne (DE)
(72) Erfinder: Apel, Peter, 59394 Südkirchen (DE)
(74) Vertreter: Hoffmeister, Helmut, Dr. Dipl.-Phys.

(57) **Zusammenfassung**

Um die Statorteilelemente und das Ringmagnetteilelement eines Drehwinkelsensors einfacher und genauer positionieren zu können, weisen die Statorteilelemente (1, 2) ein Stegelement auf und ein Hallsensor (4, 5) und eine Steckereinheit sind durch ein Stanzgitter verbunden. Die Stegelemente der Statorteilelemente (1, 2) und das Stanzgitter sind wenigstens teilweise in die Gehäuseeinheit eingeformt.
Das Ringmagnetteilelement (70) ist als wenigstens ein Magnetsegment mit einem Stegelement ausgebildet, das wenigstens mit dem Stegelement in eine Rotoreinheit (22) eingeformt ist.

## Beschreibung

Die Erfindung betrifft einen Drehwinkelsensor, insbesondere für eine Drosselklappenverstelleinrichtung, die wenigstens aufweist
- eine Statoreinheit mit wenigstens zwei Statorteilelementen, die unter Belassung einer Abstandsausnehmung zueinander angeordnet sind,
- wobei in der Abstandsausnehmung wenigstens ein Hallsensor angeordnet ist,
- eine Rotoreinheit mit wenigstens einem Magnetelement, das gegenüber der Statoreinheit zu bewegen ist,
- eine Steckereinheit und
- eine Gehäuseeinheit, in der wenigstens der Stator wenigstens teilweise gehalten ist.

Ein Drehwinkelsensor für eine Drosselklappenverstelleinrichtung der eingangs genannten Art ist aus der WO-A-9 514 911 bekannt. In einem geschlossenen Drosselklappengehäuse ist eine Drosselklappe mit einer Drosselklappenwelle drehbar angeordnet. Mit der Drosselklappenwelle ist der Drehwinkelsensor verbunden, der aus einer stationären und einer rotierenden Einheit besteht. Zwischen zwei Statorteilelementen der stationären Einheit ist ein Hallelement angeordnet. Die rotierende Einheit weist einen Ringmagneten auf, der um das Statorelement bewegbar ist.

Der Drehwinkelsensor ist hier in einem Gehäusebecher angeordnet und ist separat von außen auf das Drosselklappengehäuse aufgesetzt. Kommt als Antriebseinheit eine Motoreinheit und eine Getriebeeinheit zum Einsatz, werden diese zusammen mit dem Drehwinkelsensor und einer Schaltungseinheit lediglich in einem Aktuatorgehäuse untergebracht. Das Aktuatorgehäuse wird dann ebenfalls nur aufgesteckt. In beiden Fällen ist äußerlich sichtbar, daß das Drosselklappengehäuse mit Zusatzteilen bestückt worden ist.

Deshalb bildet die prioritätsjüngere Patentanmeldung mit dem Aktenzeichen DE 199 03 490.7 den Drehwinkelsensor so weiter, daß sowohl die stationäre als auch die rotierende Einheit in einem Deckelelement untergebracht sind. Das Deckelelement kann darüber hinaus ein Getriebe der Drosselklappenverstelleinrichtung mit aufnehmen. Mit Hilfe des so bestückten Deckelelementes kann das Gehäuse der Drosselklappenverstelleinrichtung verschlossen werden.

Ausgehend von diesem Stand der Technik stellt sich die Aufgabe, wenigstens die Statorteilelemente und das Ringmagnetteilelement einfacher und genauer zu positionieren und auszubilden.

Erfindungsgemäß wird diese Aufgabe durch die Merkmale des Anspruches 1 oder 2 oder 3 oder 4 oder 5 oder 6 gelöst.

Durch die in den Unteransprüchen aufgeführten Maßnahmen sind vorteilhafte Weiterbildungen und Verbesserungen des im Anspruch 1 oder 2 oder 3 oder 4 oder 5 oder 6 angegebenen Drehwinkelsensors möglich.

Die Erfindung ist in der Zeichnung vereinfacht dargestellt und in der nachfolgenden Beschreibung unter Angabe der Vorteile der Erfindung näher erläutert.

Es zeigen:
- Fig. 1a: eine erste Ausführungsform eines Drehwinkelsensors in einer schematischen, perspektivischen Darstel lung,
- Fig. 1b: eine Statoreinheit eines Drehwinkelsensors gemäß Fig. 1a mit einer ersten Ausführungsform eines Stanzgitters in einer schematisch dargestellten Draufsicht,
- Fig. 2: einen Schnitt durch eine Statoreinheit gemäß Fig. 1b entlang der Linie A-A,
- Fig. 3: eine Statoreinheit eines Drehwinkelsensors gemäß Fig. 1a mit einer zweiten Ausführungsform eines Stanzgitters in einer schematisch dargestellten Draufsicht,
- Fig. 4: einen Schnitt durch einen Drehwinkelsensor gemäß Fig. 3 entlang der Linie C-C,
- Fig. 5a bis 5d: ein Statorsegment mit unterschiedlich ausgebildeten Stegen, dargestellt in vergrößerten Schnittdarstellungen eines Schnitts durch einen Drehwinkelsensor gemäß Fig. 1 und 3 entlang der Linie B-B,
- Fig. 6: eine zweite Ausführungsform eines Drehwinkelsensors mit einer dritten Ausführungsform eines Stanzgitters in einer schematisch dargestellten Draufsicht,
- Fig. 7: einen Schnitt durch einen Drehwinkelsensor gem. Fig. 6 entlang der Linie VII-VII,
- Fig. 8a: eine zweite Ausführungsform eines Drehwinkelsensors mit einer vierten Ausführungsform eines Stanzgitters in einer schematisch dargestellten Draufsicht,
- Fig. 8b: einen Schnitt durch einen Drehwinkelsensor gemäß Figur 8 entlang der Linie IX - IX,
- Fig. 9: einen vergrößerten Teilausschnitt eines Drehwinkelsensors gemäß Fig. 1a mit einer Rotoreinheit in einer schematischen Draufsicht
- Fig. 10a bis 10f: eine Rotoreinheit gemäß Fig. 9 für einen Drehwinkelsensor gemäß den Fig. 1 bis 5d mit unterschiedlich augebildeten Ringmagnetteilelementen in einer schematisch dargestellten Teildraufsicht,
- Fig. 11a bis Fig. 11f: jeweils einen Schnitt durch einen Rotor gemäß Fig. 10a bis 10f entlang der Linie XI A - XI A bis Linie XI F - XI F
- Fig. 12 a bis 12f: einen Ausschnitt X aus einer Schnittdarstellung gemäß den Fig. 11a bis 11f d.

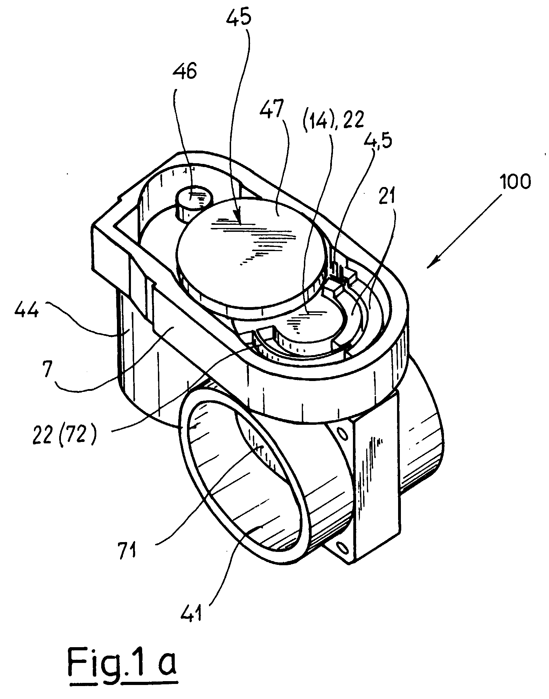

In Fig. 1a ist ein Drosselklappendrehwinkelsensor 100 dargestellt. Er besteht aus
- einer Drosselklappeneinheit, bestehend aus einem Drosselklappengehäuse 43 und
- einer in dem Drosselklappengehäuse 43 über eine Drosselklappenwelle verstellbar angeordnete Drosselklappe 71.

Auf dem Drosselklappengehäuse 43 ist ein Deckelelement 7 angeordnet, das einen Motor 44 trägt. Das Deckelelement 6 kann als geschlossene Formation hergestellt werden. Es kann auch als offene Konfiguration gefertigt werden, die dann anschließend mit einem separaten Deckel verschlossen wird.

Im Deckelelement 7 sind angeordnet
- ein Getriebe 45,
- eine Statoreinheit 21 und
- eine Rotoreinheit 22 einer Hall-Effekt-Drehwinkelsensoreinrichtung.

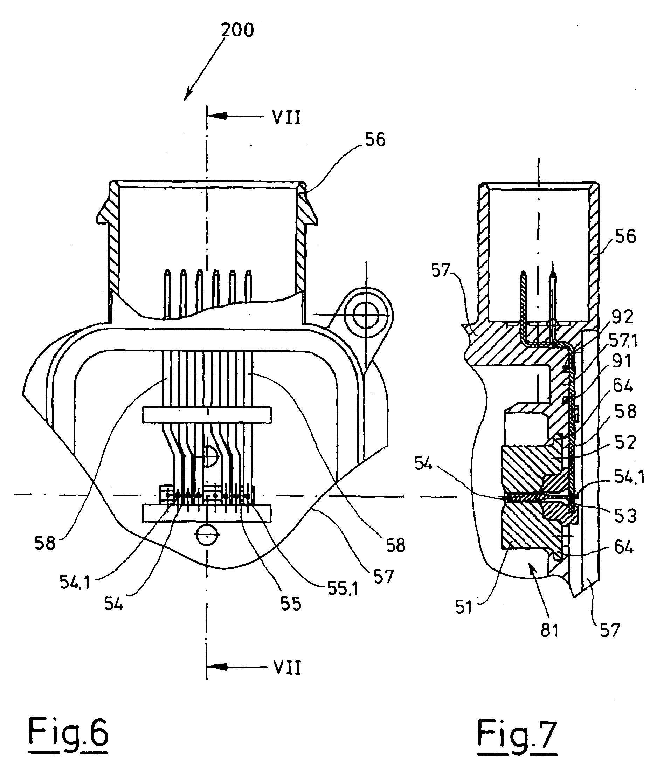

Das Getriebe 45 kann als herkömmliches Getriebe oder als Planetengetriebe ausgebildet sein. Es besteht aus einem Motorritzel 46, das mit der Welle des Motors 44 verbunden ist. Das Motorritzel 46 arbeitet mit einem Zwischenritzel 47 zusammen, an dessen Unterseite (vgl. auch Fig. 6) ein Stellritzel 48 angeordnet ist. Das Stellritzel 48 wiederum arbeitet mit einem Zahnrad 22, das als Zahnradsegment ausgebildet ist, zusammen, das mit der Drosselklappenwelle verbunden oder verbindbar ist.

Erfindungswesentlich ist die Ausgestaltung der stationären und der beweglichen Einheit.

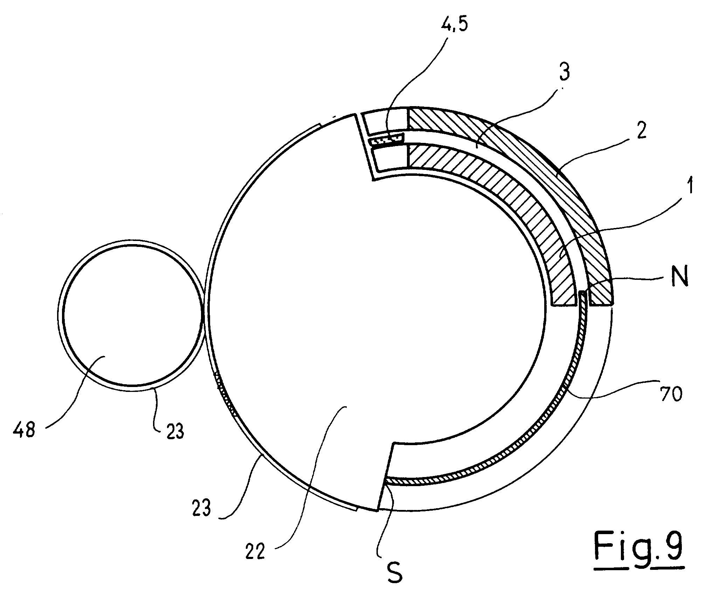

Wie Fig. 9 zeigt, wird die stationäre Einheit gebildet durch zwei sich gegenüberliegende Statorteilsegmente 1, 2. Die Statorteilsegmente 1, 2 sind in dem Gehäuseelement 7 gehalten. Zwischen den beiden Statorsegmenten befindet sich ein Luftspalt 15, der zugleich auch Statorabstandsausnehmung 3 ist, an dessen Ende ein oder zwei Hall-Sensoren (ASIC) 4, 5 angeordnet sind.

Das Zahnradsegment 22 arbeitet auf etwa einem Drittel seines Umfangs mit dem Stellritzel 48 zusammen, wobei beide Zahnräder eine Verzahnung 23 aufweisen. Das Zahnradsegment 22 ist mit einer Feder verbunden, die im Deckelelement 7 gehalten wird. Hierdurch wird gewährleistet, daß das Zahnradsegment 22 immer in eine definierte Endstellung gedreht wird. Mit dem Drehen des Zahnradsegments 22 in die vorgesehene Endstellung wird gesichert, daß der Drosselklappendrehwinkelsensor 100 ebenfalls eine definierte Endstellung einnimmt. Zur Abdichtungszwecken ist wenigstens zwischen dem Zahnradsegment 22 und dem Deckelelement 7 ein Simmerring 72 angeordnet.

Dem verzahnten Segment des Zahnradsegments 22 liegt ein halbkreisförmiges weiteres Segment gegenüber, das beabstandet gegenüber dem Statorteilsegment 1 ist. An dieses Segment ist einseitig ein teilringförmig ausgebildete Ringmagnetteilelement 70 als rotierende Einheit angeformt. Dadurch, daß das Zahnradsegment 22 aus Kunststoff besteht, ist das teilkreisförmig ausgebildete Ringmagnetteilelement 70 lagegerecht und genau einzuformen. Beim Verdrehen des Zahnradsegments 22 fährt das Ringmagnetteilelement 70 wie eine Sichel in die mit 3 bezeichnete Abstandsausnehmungen hinein und erzeugt so einen veränderlichen Hall-Spannungswert.

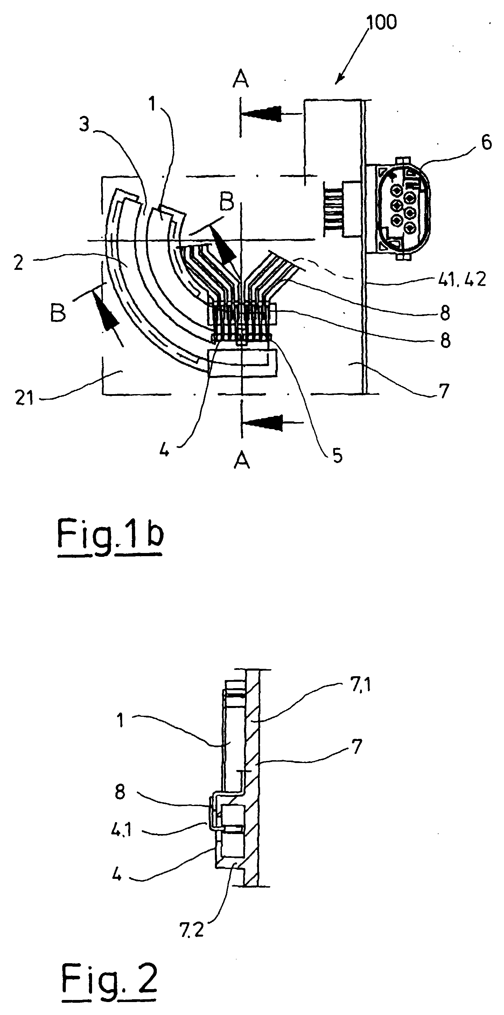

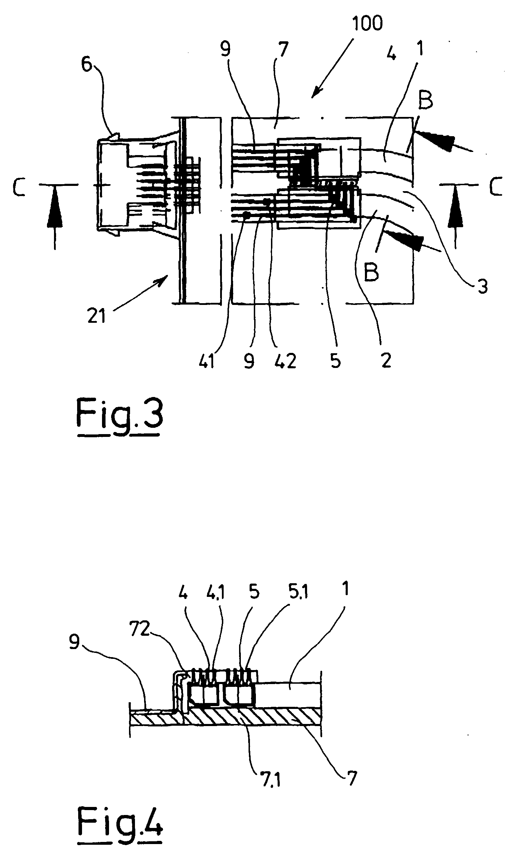

In den Fig 1b und 3 ist die Statoreinheit 21 des Drehwinkelsensors mit
- dem Statorsegment 1 und
- dem Statorsegment 2, die
- unter Belassung der Abstandsausnehmung 3 zueinander angeordnet sind,
im Detail dargestellt.

Die Statorsegmente sind teilkreisförmig ausgebildet. Der Teilkreis kann einen Winkel zwischen 80° und 180° haben. Im Ergebnis längerer Versuche wurde festgestellt, daß ein Viertel-Teilkreis von 115° die genauesten Meßwerte erzeugt. Hierdurch ergeben sich die beiden gegenüberliegenden sichelförmigen Konfigurationen der Statorsegmente 1, 2.

An einem Ende der sich gegenüberliegenden Statorsegmente sind in der Abstandsausnehmung 3 ein Hallsensor 4 und ein Hallsensor 5 angeordnet. Beide Hallsensoren weisen eine Vielzahl nebeneinander liegender Sensorkontakte 4.1, 5.1 auf.

Erfindungswesentlich ist, daß die Verbindung von den Hallsensoren 4, 5 zur Steckereinheit 6 durch ein Stanzgitter 8, 9 vorgenommen wird. Anstelle der Steckereinheit 6 kann auch eine beliebige andere Einheit Verbindungsziel der Stanzgitter sein. Die Stanzgitter 8, 9 werden aus einem Blech unter Belassung wenigstens eines Stegs zwischen den einzelnen Stanzgitterleiterzügen ausgestanzt. Auf den Stanzgittern 8, 9 können Bauelemente 41, 42 angeordnet sein.

In Fig. 1b ist das Stanzgitter 8 gezeigt. Bei dieser ersten Ausführungsform sind die einzelnen Leiterzüge des Stanzgitters 8 parallel auf die Sensorkontakte 4.1, 5.1 geführt. Die Leiterzüge des Stanzgitter 8 sind winklig ausgeführt, so daß in der Draufsicht auf die beiden nebeneinander liegenden Stanzgitter 8 eine V-förmige Konfiguration entsteht.

In Fig. 3 ist das Stanzgitter 9 gezeigt. Bei dieser zweiten Ausführungsform werden die einzelnen Leiterzüge des Stanzgitters 9 in Reihe zu den nebeneinander liegenden Sensorkontakten 4.1, 5.1 geführt, so daß sich in der Draufsicht eine im wesentlichen U-förmige Konfiguration der beiden sich gegenüberliegenden Stanzgitter 9 ergibt. Der untere Schenkel des U ist unterteilt in eine Verbindung zu den Sensorkontakten 4.1 des Hallsensors und eine weitere Verbindung zu den Sensorkontakten 5.1 des Hallsensors 5. Die nebeneinander liegenden Leiterzüge der beiden Stanzgitter werden dann auf den Steckerkontakt 6 geführt.

Erfindungswesentlich ist weiterhin, daß die Statorsegmente einen Steg aufweisen.

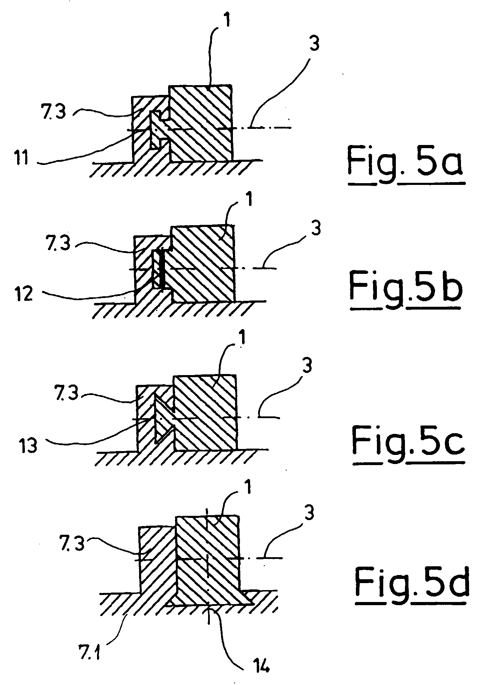

In Fig. 5a ist an das Statorsegment 1 ein T-Seitensteg 11 angeformt. Der T-förmige Seitensteg 11 besteht aus einem Schenkelsteg, der an das Statorsegment 1 angeformt ist, an dem sich ein querliegender Steg mit vergleichender Stärke anschließt.

In Fig. 5b ist ein I-Seitensteg an das Statorsegment 12 angeformt. Er besteht aus einer stegförmigen Anformung, in die wenigstens teilweise eine Sicke eingebracht ist.

In Fig. 5c ist an der Seite des Statorsegments 1 ein V-Seitensteg 13 angeformt. Der V-Seitensteg hat eine schwalbenschwanzförmige Konfiguration und ist mit seiner Schwanzspitze setlich an das Statorsegments 1 angeformt.

In Fig. 5d setzt sich das Statorsegment 1 in einen umgekehrt V-Fußsteg 14 weiter. Der V-Fußsteg ist im Querschnitt wie ein Pyramdenstumpf ausgebildet.

Der T-Seitensteg 11, der E-Seitensteg 12, der V-Seitensteg 13 und der V-Fußsteg 14 folgen in ihrer Konfiguration dem teilkreisförmig ausgebildeten Statorsegment 1.

Ebenso wie am Statorsegment 1 sind am Statorsegment 2 eben solche Stege 11, ... 14 angeformt.

Mit 7 ist in Fig. 1a, 1b und 3 das Deckelelement bezeichnet. Das Deckelelement 7 wird aus einem magnetisch und/oder elektrisch nicht leitendem Material geformt. Dieses Material kann ein Kunststoff sein.

Erfindungswesentlich ist außerdem, daß die Stege 11, ... der Statorsegmente 1, 2 und die Stanzgitter 8, 9 und die Bauelemente bei der Formung des Deckelelementes 7 mit eingeformt werden. Hierbei werden, wie die Fig. 5a bis 5d zeigen, die Stege 11, ... der Statorsegmente 1, 2 in eine Deckelstatorwand 7.3 bzw in eine Deckelwand 7.1 eingeformt, die zugleich mit dem Deckelelement geformt werden. Durch ihre besondere Konfiguration sorgen die Stege 11,... dafür, daß die Statorsegmente 1, 2 sicher und vor allen Dingen lagegerecht gehalten werden. Die Abstandsausnehmung 3 wird dadurch genauestens und ebenfalls lagegenau ausgebildet.

Im Bereich der Hallsensoren 4, 5 wird mit der Deckelwand ein Deckelsensorblock 7.2 geformt. Der Deckelsensorblock 7.2 ist gegenüber den beiden Hallsensoren 4, 5 höher als die Deckelstatorwand 7.3 ausgeführt. Der Deckelsensorblock 7.2 reicht wenigstens bis zu den Sensorkontakten 4.1, 5.1. Er kann die Sensorkontakte entweder freilassen oder mit einformen. Bleiben die Sensorkontakte frei, stehen sie für Prüfungs- und Kontrollzwecke jederzeit zur Verfügung. Werden sie hingegen ebenso wie die Stanzgitter 8, 9 von dem Material des Deckelelementes 7 mit umschlossen, sind sie gegenüber sämtlichen Einflüssen vollständig abgeschirmt und isoliert.

Sind die Stanzgitter eingeformt, werden während der Formungsphase des Deckelelementes vorhandene Stege zwischen den einzelnen Leiterzügen des Stanzgitters 8, 9 entfernt.

Ist das so bestücke Deckelelement 7 fertiggestellt, kann mit ihm das Gehäuse 43 einer Drosselklappeneinheit verschlossen werden.

Anstatt in dem Deckelelement 7 können in dem Gehäuse der Drosselklappeneinheit oder einem separaten Sensorgehäuse in gleicher Art und Weise die Statorsegmente 1, 2 und die Stanzgitter 8, 9 eingeformt werden. Dabei können die Bauelemente auch hier mit eingeformt werden Das Gehäuse braucht nur teilweise aus einem magnetisch und/oder elektrisch nicht leitendem Material geformt werden. Und zwar nur der Teil, der den Drehwinkelsensor 100 aufnimmt Die übrigen Teile des Gehäuse der Drosselklappeneinheit aus Eisen oder dergleichen geformt sein.

Die Form und die Ausbildung der Stanzgitter ist nicht an die Formen gemäß der Stanzgitter 8, 9 gebunden. Die Stanzgitter können in den Konfigurationen ausgestanzt werden, die für eine Leitungsverbindung von den Hallsensoren 4, 5 bis zu einer Abnahmeeinheitpunkt für die Signale, der hier durch eine mit 6 bezeichnete Steckereinheit ist.

In den Fig. 6 bis 8b ist eine Statoreinheit 81 eines Drehwinkelsensors 200 dargestellt.

Die Statoreinheit 81 besteht aus zwei apfelsinenscheibenförmig ausgebildeten Statorhalbscheiben 51, 52. Die Statorhalbscheiben 51, 52 lassen zwischen sich eine Abstandsausnehmung 53 frei. Sie weisen jeweils einen L-Fußsteg 64 auf.

In der Abstandsausnehmung 53 ist ein Hallsensor 54 mit Sensorkontakten 54.1 und Hallsensor 55 mit Sensorkontakten 55.1 angeordnet.

Die Steckerkontakte 54.1, 55.1 sind jeweils mit einem Stanzgitter 58, 59 verbunden und führen zu Steckkontakten einer Steckereinheit 56.

Der Drehwinkelsensor weist ein Sensorgehäuse 57 auf, das ebenfalls aus einem elektrisch und/oder magnetisch nicht leitendem Material geformt ist. Dieses Material kann Kunststoff sein. Beim Formen des Sensorgehäuses werden zugleich die Statorhalbscheiben mit ihren aus L-Fußstegen 64 und die beiden Ausführungsformen 58, 59 der Stanzgitter mit eingeformt.

Das Stanzgitter 58 ist gerade unterhalb der Sensorkontakte geführt.Es kann auch wie das Stanzgitter 8 geformt sein. Jeder Sensorkontakt 54.1, 55.1 der Hall-Sensoren 54, 55 ist mit einem Leitungszug der Stanzgitter 58 verbunden.

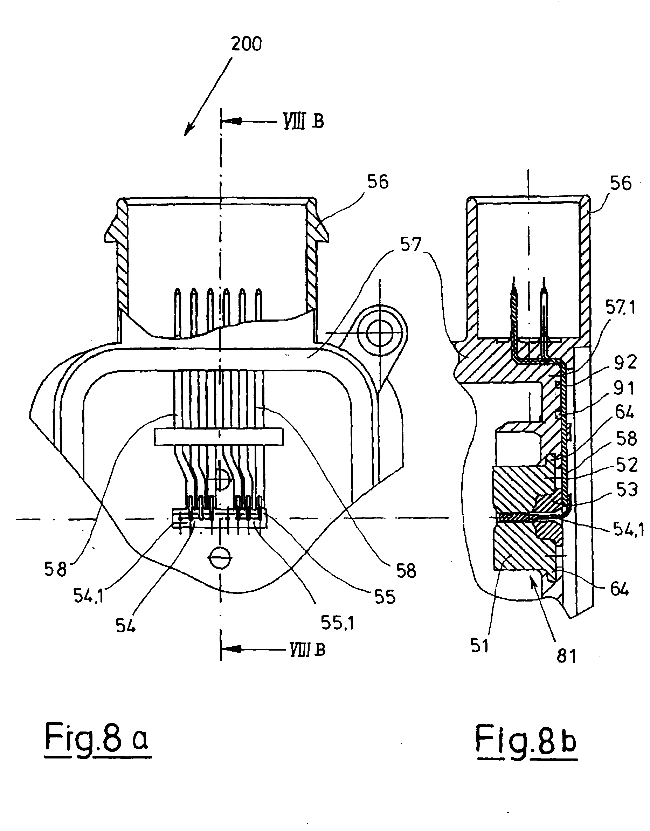

Die Sensorkontakte 54.1, 55.1 der Hallsensoren sind, wie die Fig 8 und 9 zeigen, L-förmig abgewinkelt. In diese abgewinkelten Sensorkontakte sind die Stanzgitter 59 eingeführt. Das Stanzgitter 59 ist ebenfalls gerade ausgebildet. Die Stanzgitter 58, 59 können aber in Abhängigkeit von den jeweiligen Einsatzbedingungen auch wie bereits erwähnt anders ausgebildet sein. An den Stanzgittern 58, 59 können ebenfalls Bauelemente 91, 92 angeordnet sein.

Die elektrische Verbindung der Stanzgitter 58, 59 mit den Sensorkontakten 54.1, 55.1 erfolgt ebenso wie bei den Stanzgittern 8,9 und den Sensorkontakten 4.1, 5.1 durch Schweißen, Bonden, Löten, Kröpfen oder durch eine andere bekannte Verbindungsform.

Beim Formen des Sensorgehäuses 57 werden die Fußstege 64 der Statorhalbscheiben 51, 52 und die Stanzgitter 58, 59 sowie die Bauelemente mit eingeformt und damit lagegerecht gehalten. Die Stanzgitter und die Bauelemente werden darüberhinaus vor äußeren Einflüssen geschützt.

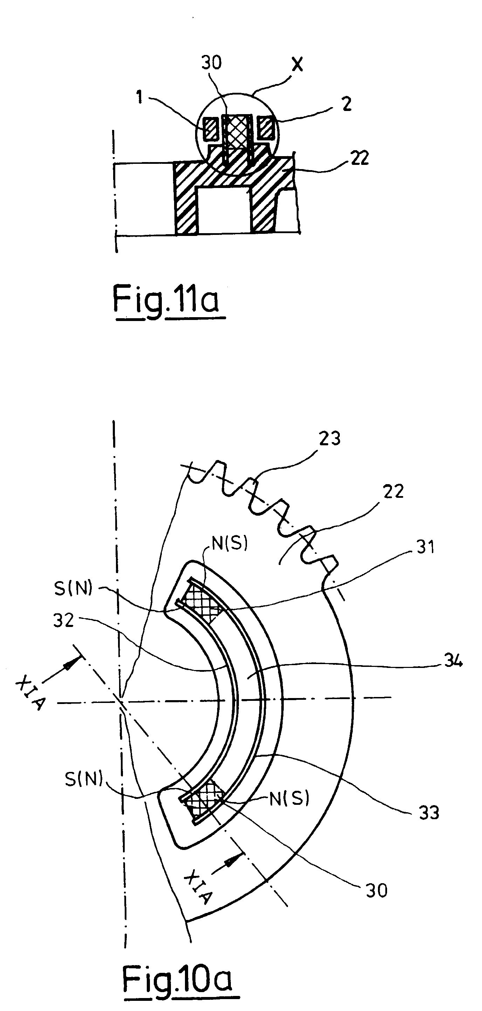

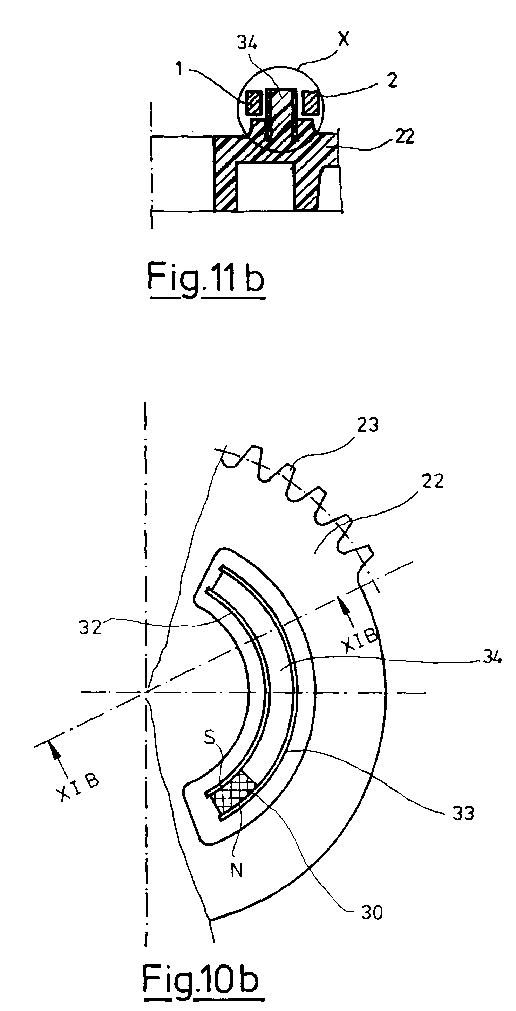

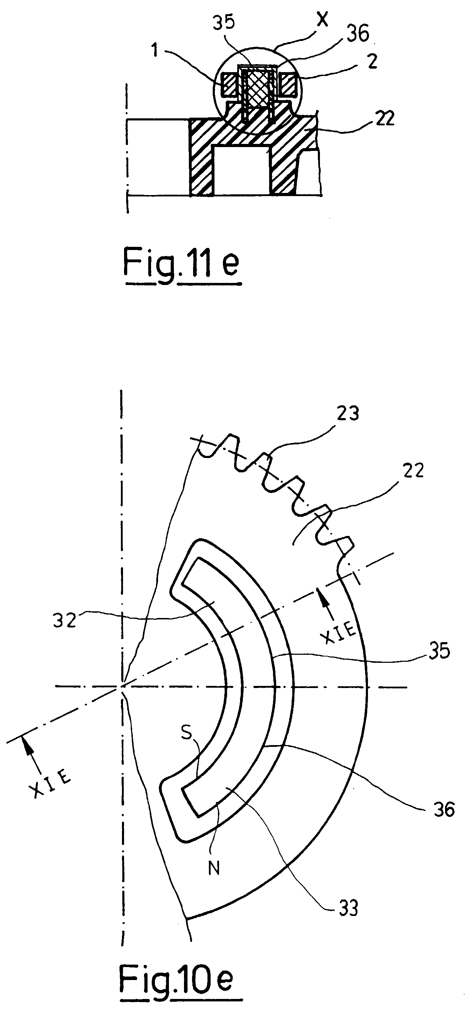

In den Fig. 10a bis 12f ist die Rotoreinheit 22 gemäß Fig. 9, die gegenüber der Statoreinheit 21 gemäß den Fig. 1a bis 5d zu bewegen ist, mit unterschiedlich ausgebildeten Ringmagnetteilelementen 70 dargestellt.

Die Rotoreinheit 22 ist hier, wie bereits ausgeführt, als Zahnrad 22 des Getriebes 45 ausgebildet.

Das Zahnrad 22, das die Verzahnung 23 aufweist, ist aus einem magnetisch und/oder elektrisch nicht leitendem Material, wie Kunststoff oder dergleichen, geformt.

Das Ringmagnetteilelement 70 kann wie folgt ausgebildet werden:

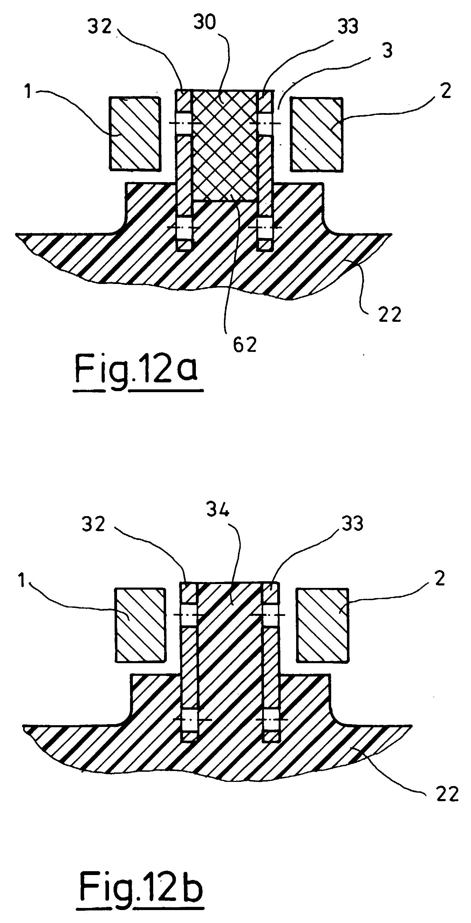

Gemäß Fig 11a besteht das Magnetelement aus zwei Magnetsegmenten 30, 31, die von beiden Seiten durch ein Flußleitblech 32, 33 begrenzt sind. Deren Nordpol N ist auf das Flußleitblech 33 und deren Südpol S auf das Flußleitblech 32 gerichtet. Wie das in Klammern gesetzte 5 bzw. N zeigt, kann es auch umgekehrt sein.

Beim Formen des Zahnrades 22 werden zugleich die beiden Magnetsegmente und die beiden Flußleitbleche mit eingeformt und der zwischen ihnen befindliche freie Raum durch einen Kunststoffkörper 34 ausgefüllt. Hierdurch ist gesichert, daß beide Magnetsegmente und die Flußleitbleche 32, 33 lagegerecht gehalten werden. Von besonderer Bedeutung ist, daß durch diese Konfiguration teures Magnetmaterial eingespart wird. Die beiden Magnetsegmente 30, 31 brauchen nur so lang ausgebildet zu werden, daß sie etwa drei bis fünfzehn Prozent der Winkellänge der beiden Flußleitbleche ausmachen. Durch die beiden Flußleitbleche 32, 33 wird der magnetische Fluß von beiden Magnetsegmenten, die wie bereits beschrieben entsprechend gepolt sind, weitergeleitet. Die Flußleitbleche übernehmen darüberhinaus eine Schutzfunktion insbesondere beim Transport der Sensorteile bzw. des gesamten Sensors 100.

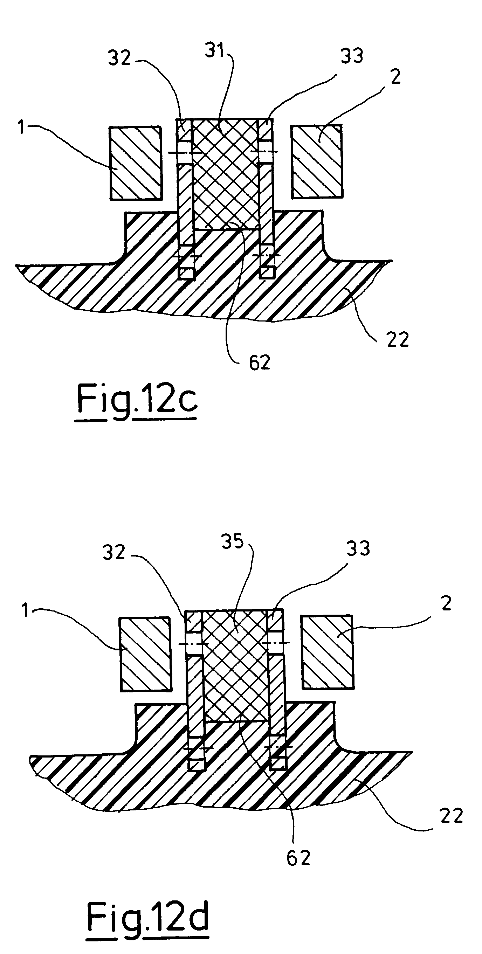

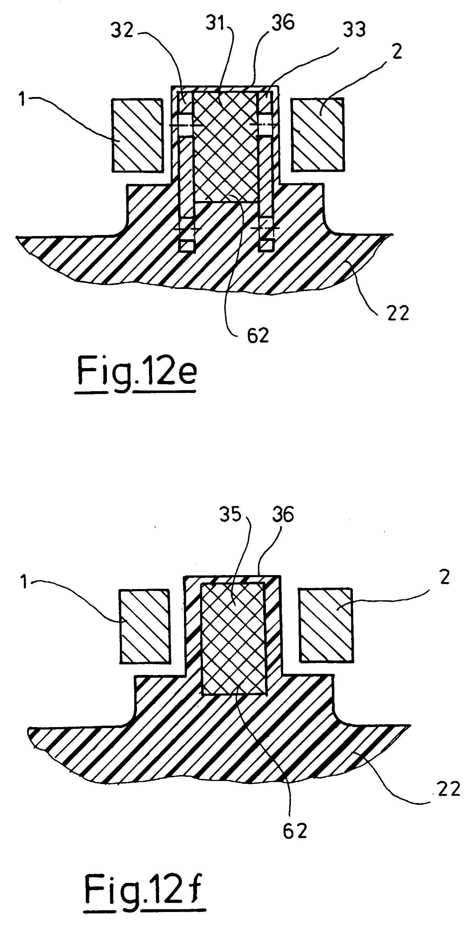

Fig. 12 a zeigt, daß die Magnetsegmente mit den beiden Flußleitblechen in der Abstandsausnehmung 3 zwischen dem Statorsegment 1 und dem Statorsegment 2 zu bewegen sind. Der hierbei sich verändernde und durch die Statorsegmente 1, 2 über die Hallsensoren 4, 5 geleitete Magnetfluß erzeugt Ausgangssignale, die ein Maß für die Auslenkung des Zahnrades 22 sind.

Aus Fig. 12a wird darüberhinaus deutlich, daß die Magnetsegmente jeweils durch einen I-Seitensteg 62 in dem Kunststoff des Zahnrades 22 gehalten werden.

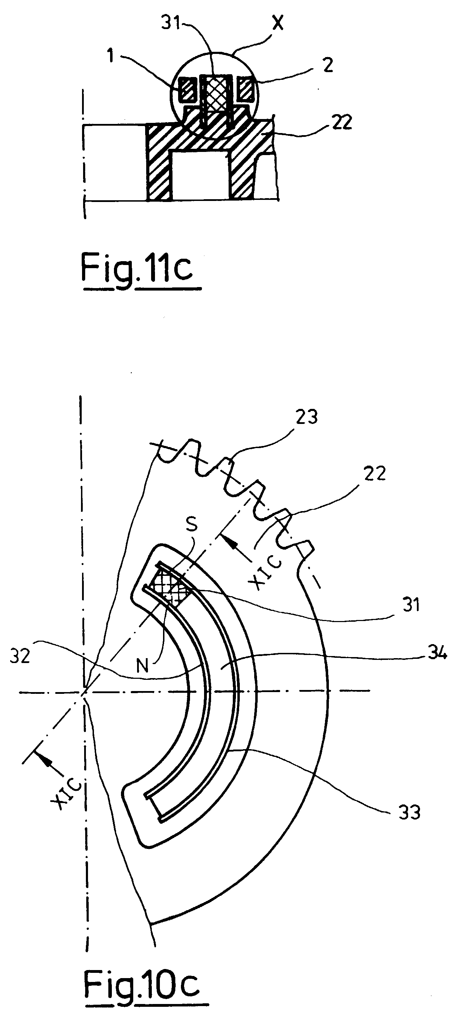

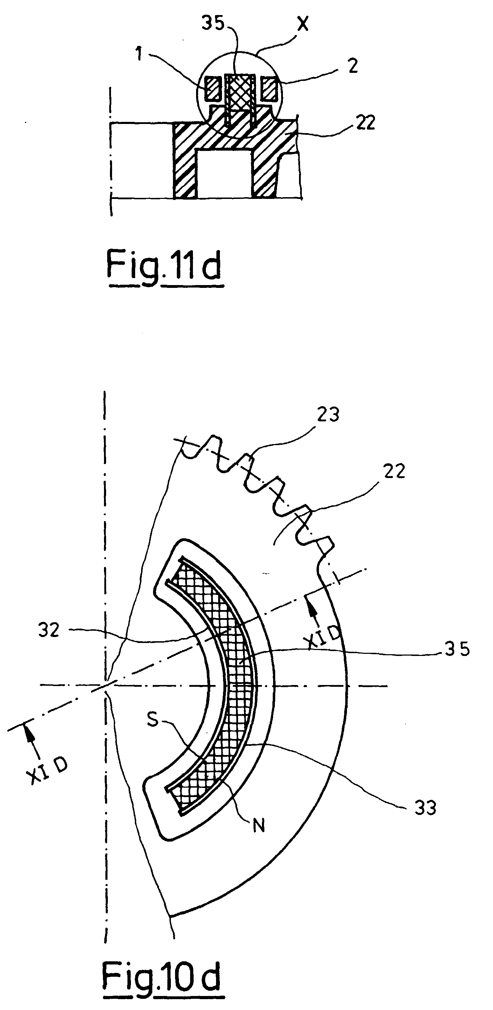

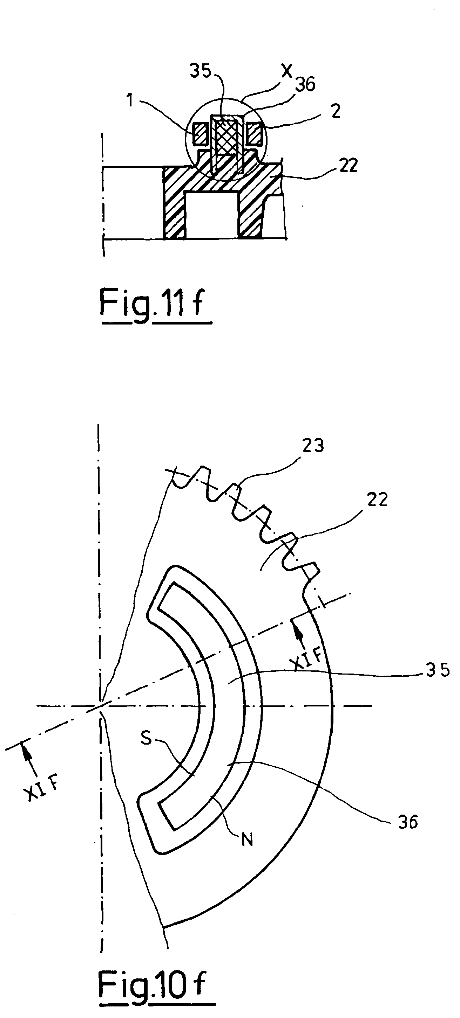

Gemäß Fig. 10 b, 11 b und 12 b besteht das Magnetelement nur aus dem Magnetsegment 30, zu dessen beiden Seiten die Flußleitbleche 32, 33 mit in das Material des Zahnrads 22 mit eingeformt sind.
In Fig. 12 b ist besonders gut der zwischen den Flußleitblechen eingeformte Kunststoffkörper 35 zu sehen. Wird das Zahnrad aus einem anderen Material geformt, besteht der mit 35 bezeichnete Körper aus diesem Material. Ist das Material magnetisch leitend, werden die Magnetsegmente und die Flußleitbleche in den isolierenden Kunststoff eingeformt.

Gemäß Fig. 10 c, 11 c und 12 c besteht das Magnetelement nur aus dem Magnetsegment 31, zu dessen Seiten die beiden Flußleitbleche in der bereits beschriebenen Art mit eingeformt sind. Gegenüber dem Magnetsegment 30 ist lediglich zu Verdeutlichungszwecken die Magnetpolung anders eingezeichnet. Von besonderer Bedeutung ist, daß durch den Einsatz nur eines Magnetsegments noch mehr Magnetmaterial eingespart wird.

Gemäß Fig. 10 d, 11 d und 12 d besteht das Magnetelement aus einem Magnetsegment 35, das in etwa die gleiche Länge wie das begrenzenden Flußleitbleche 32, 33 hat, so daß sich zwischen ihnen kein Kunststoffkörper befindet, wie insbesondere Fig. 12 d verdeutlicht. Ihr Einformen wird in der bereits beschriebenen Art und Weise durchgeführt. Die Flußleitbleche übernehmen hier insbesondere eine Schutzfunktion für das Magnetsegment.

In Fig. 10e, 11e und 12e besteht das Magnetelement ebenso wie in Fig. 10d, 11d und 12d aus einem Magnetsegment 35, das die gleiche Länge wie die sie begrenzenden Flußleitbleche 32, 33 hat, nur daß diese mit einem Kunststoffaußenkörper 36 überzogen sind. Hierdurch werden diese Teile allseitig mit Kunststoff überdeckt und vor äußeren Einflüssen wirksam geschützt.

In der gleichen Art und Weise können die Konfigurationen gemäß Fig. 10a, 11a und 12a, 10b, 11b und 12b sowie 10c, 11c und 12c vor dem Kunststoffaußenkörper 36 überzogen sein.

In Fig. 10f, 11f und 12f ist das Magnetsegment 35 allein vollständig von dem Kunststoffaußenkörper 36 überzogen, was die bereits beschriebenen Vorteile bringt. In gleicher Weise können die einzelnen Magnetsegmente 30 bzw. 31 ohne Flußleitbleche gemäß Fig. 10a, 11a, 12a sowie Fig. 10b, 11b und 12b überzogen werden.

## Patentansprüche

1. Drehwinkelsensor , insbesondere für eine Drosselklappenverstelleinrichtung, die wenigstens aufweist
- eine Statoreinheit (21; 81) mit wenigstens zwei Statorteilelementen (1, 2; 51, 52), die unter Belassung einer Abstandsausnehmung (3; 53) zueinander angeordnet sind,
- wobei in der Abstandsausnehmung (3; 53) wenigstens ein Hallsensor (4, 5; 54, 55) angeordnet ist,
- eine Rotoreinheit (22) mit wenigstens einem Ringmagnetteilelement (70), das gegenüber der Statoreinheit (21; 81) zu bewegen ist,
- eine Steckereinheit (6; 56) und
- eine Gehäuseeinheit (7; 57), in der wenigstens die Statoreinheit (21; 81) wenigstens teilweise gehalten ist,
**dadurch gekennzeichnet**
- daß das Ringmagnetteilelement (70) ein Stegelement (62) aufweist und
- daß das Stegelement (62)des Ringmagnetteilelements (70) in die Rotoreinheit (22) eingeformt sind.

2. Drehwinkelsensor , insbesondere für eine Drosselklappenverstelleinrichtung, die wenigstens aufweist
- eine Statoreinheit (21; 81) mit wenigstens zwei Statorteilelementen (1, 2; 51, 52), die unter Belassung einer Abstandsausnehmung (3; 53) zueinander angeordnet sind,
- wobei in der Abstandsausnehmung (3; 53) wenigstens ein Hallsensor (4, 5; 54, 55) angeordnet ist,
- eine Rotoreinheit (22) mit wenigstens einem Ringma(21; 81) zu bewegen ist,
- eine Steckereinheit (6; 56) und
- eine Gehäuseeinheit (7; 57), in der wenigstens die Statoreinheit (21, 81) wenigstens teilweise gehalten ist,
**dadurch gekennzeichnet**
- daß die Statorteilelemente (1, 2; 51, 52) ein Stegelement (11, 12, 13, 14; 64) aufweisen,
- daß der Hallsensor (4, 5; 54, 55) und die Steckereinheit (6; 56) durch ein Stanzgitter (8, 9; 58, 59) verbunden sind und
- daß wenigstens die Stegelemente (11,...; 64) der Statorteilelemente (1, 2; 51, 52) und das Stanzgitter (8, 9; 58, 59) in die Gehäuseeinheit (7; 57) wenigstens teilweise eingeformt sind<.

3. Drehwinkelsensor , insbesondere für eine Drosselklappenverstelleinrichtung, die wenigstens aufweist
- eine Statoreinheit (21) mit wenigstens zwei Statorteilelementen (1, 2), die unter Belassung einer Abstandsausnehmung (3) zueinander angeordnet sind,
- wobei in der Abstandsausnehmung (3) wenigstens ein Hallsensor (4, 5) angeordnet ist,
- eine Rotoreinheit (22) mit wenigstens einem Ringmagnetteilelement (70), das gegenüber der Statoreinheit (21; 81) zu bewegen ist,
- eine Steckereinheit (6) und
- eine Gehäuseeinheit (7), in der wenigstens die Statoreinheit (21) wenigstens teilweise gehalten ist,
**dadurch gekennzeichnet**
- daß das Ringmagnetteilelement (70) ein Stegelement (62) aufweist und
- daß das Ringmagnetteilelement (70) als wenigstens ein Magnetsegment (30, 31, 35) ausgebildet ist, das wenigstens mit dem Stegelement (62) in der Rotoreinheit (22) angeordnet.

4. Drehwinkelsensor , insbesondere für eine Drosselklappenverstelleinrichtung, die wenigstens aufweist
- eine Statoreinheit (21) mit wenigstens zwei Statorteilelementen (1, 2), die unter Belassung einer Abstandsausnehmung (3) zueinander angeordnet sind,
- wobei in der Abstandsausnehmung (3) wenigstens ein Hallsensor (4, 5) angeordnet ist,
- eine Rotoreinheit (22) mit wenigstens einem Ringmagnetteilelement (70), das gegenüber der Statoreinheit (21; 81) zu bewegen ist,
- eine Steckereinheit (6) und
- eine Gehäuseeinheit (7), in der wenigstens die Statoreinheit (21) wenigstens teilweise gehalten ist,
**dadurch gekennzeichnet** daß das Ringmagnetteilelement (70) als wenigstens ein Magnetsegment (30, 31, 35) mit wenigstens einem daran angeordneten Flußleitblech (32, 33) ausgebildet ist, die wenigstens teilweise in der Rotoreinheit (22) angeordnet sind.

5. Drehwinkelsensor , insbesondere für eine Drosselklappenverstelleinrichtung, die wenigstens aufweist
- eine Statoreinheit (21) mit wenigstens zwei Statorteilelementen (1, 2), die unter Belassung einer Abstandsausnehmung (3) zueinander angeordnet sind,
- wobei in der Abstandsausnehmung (3) wenigstens ein Hallsensor (4, 5) angeordnet ist,
- eine Rotoreinheit (22) mit wenigstens einem Ringmagnetteilelement (70), das gegenüber der Statoreinheit (21; 81) zu bewegen ist,
- eine Steckereinheit (6) und
- eine Gehäuseeinheit (7), in der wenigstens die Statoreinheit (21) wenigstens teilweise gehalten ist,
**dadurch gekennzeichnet**
- daß die Statorteilelemente (1, 2) ein Stegelement (11, 12, 13, 14) aufweisen und der Hallsensor (4, 5) und die Steckereinheit (6) durch ein Stanzgitter (8, 9) verbunden sind,
- daß die Stegelemente (11, 12, 13, 14) der Statorteilelemente (1, 2) und das Stanzgitter (8, 9) wenigstens teilweise in die Gehäuseeinheit (7) eingeformt sind und
- daß das Ringmagnetteilelement (70) als wenigstens ein Magnetsegment (30, 31, 35) mit einem Stegelement (62) ausgebildet ist, das wenigstens mit dem Stegelement in die Rotoreinheit (22) eingeformt ist.

6. Drehwinkelsensor , insbesondere für eine Drosselklappenverstelleinrichtung, die wenigstens aufweist
- eine Statoreinheit (21) mit wenigstens zwei Statorteilelementen (1, 2), die unter Belassung einer Abstandsausnehmung (3) zueinander angeordnet sind,
- wobei in der Abstandsausnehmung (3) wenigstens ein Hallsensor (4, 5) angeordnet ist,
- eine Rotoreinheit (22) mit wenigstens einem Ringmagnetteilelement (70), das gegenüber der Statoreinheit (21; 81) zu bewegen ist,
- eine Steckereinheit (6) und
- eine Gehäuseeinheit (7), in der wenigstens die Statoreinheit (21) wenigstens teilweise gehalten ist,
**dadurch gekennzeichnet**
- daß die Statorteilelemente (1, 2) ein Stegelement (11, 12, 13, 14) aufweisen und der Hallsensor (4, 5) und die Steckereinheit (6) durch ein Stanzgitter (8, 9) verbunden sind, die wenigstens teilweise in der Gehäuseeinheit (7) eingeformt sind und
- daß das Ringmagnetteilelement (70) als wenigstens ein Magnetsegment (30, 31, 35) mit wenigstens einem daran geordneten Flußleitblech (32, 33) ausgebildet ist, die wenigstens teilweie in die Rotoreinheit (22) eingeformt sind.

7. Drehwinkelsensor nach Anspruch 1, dadurch gekennzeichnet, daß das Ringmagnetteilelement (70) als wenigstens ein Magnetsegment (30, 31, 35) ausgebildet ist.

8. Drehwinkelsensor nach Anspruch 1 oder 7 oder 3 oder 5, dadurch gekennzeichnet, daß zu wenigstens einer Seite wenigstens eines Magnetsegmentes (30, 31, 35) ein Flußleitblech (32, 33) mit in die Rotoreinheit (22) eingeformt ist.

9. Drehwinkelsensor nach Anspruch 1 oder 3 oder 4 oder 5 oder 6 oder 7 oder 8, dadurch gekennzeichnet, daß zu beiden Seiten zweier in einem Abstand angeordneten Magnetelement (30, 31) jeweils ein Flußleitblech (32, 33) mit in die Rotoreinheit (22) eingeformt sind.

10. Drehwinkelsensor nach Anspruch 2 oder 5 oder 6, dadurch gekennzeichnet, daß daß erste Statorteilelemente als Statorsegmente (1, 2) ausgebildet sind.

11. Drehwinkelsensor nach einem der Ansprüche 1 bis 10, dadurch gekennzeichnet, daß die Flußleitbleche (32, 33) ebenso lang wie ein erstes Magnetsegment(35) sind.

12. Drehwinkelsensor nach einem der Ansprüche 1 bis 11, dadurch gekennzeichnet, daß die Flußleitbleche (32, 33) wesentlich länger als wenigstens ein zweites Magnetsegment (30, 31) sind.

13. Drehwinkelsensor nach einem der Ansprüche 1 bis 12, dadurch gekennzeichnet, daß in einen Raum zwischen den Flußleitblechen (32, 33) und den zweiten Magnetsegmenten (30, 31) ein Haltekörper (34) eingeformt ist.

14. Drehwinkelsensor nach einem der Ansprüche 1 bis 13, dadurch gekennzeichnet, daß das erste Magnetsegment (35) von einem Außenkörper (36) wenigstens teilweise umschlossen ist.

15. Drehwinkelsensor nach einem der Ansprüche 1 bis 13, dadurch gekennzeichnet, daß das erste Magnetsegment (35) oder die zweiten Magnetsegmente (31, 32) und die zu beiden Seiten angeordneten Flußleitbleche (32, 33) von dem Außenkörper (36) wenigstens teilweise umschlossen sind.

16. Drehwinkelsensor nach einem der Ansprüche 1 bis 15, dadurch gekennzeichnet, daß an dem Stanzgitter (8, 9; 58, 59) wenigstens ein Bauelement (41, 42; 91, 92) angeordnet ist.

17. Drehwinkelsensor nach einem der Ansprüche 1 bis 16, dadurch gekennzeichnet, daß zweite Statorelemente als apfelsinenförmig ausgebildete Statorhalbscheiben (51, 52) ausgebildet sind.

18. Drehwinkelsensor nach einem der Ansprüche 1 bis 17, dadurch gekennzeichnet, daß zwischen der Rotoreinheit (22) und der Gehäuseeinheit (7; 57) ein Simmerring (72) angeordnet ist.

19. Drehwinkelsensor nach einem der Ansprüche 1 bis 18, dadurch gekennzeichnet, daß die Statoreinheit (21; 81) wenigstens teilweise Teil der Gehäuseeinheit (7; 57) und die Rotoreinheit wenigstens teilweise Teil (22) eines Getriebes (45) der Drosselklappenverstelleinrichtung ist.

20. Drehwinkelsensor nach Anspruch 19, dadurch gekennzeichnet, daß das Getriebeteil ein Zahnrad (22) ist

21. Drehwinkelsensor nach einem der Ansprüche 1 bis 20, dadurch gekennzeichnet, daß ein erstes sowie ein drittes und viertes Stanzgitter (8; 58, 59) ist mit den Sensorkontakten (4.1, 5.1; 54.1, 55.1) des Hallsensors (4, 5; 54, 55) in Reihe verbunden ist.

22. Drehwinkelsensor nach einem der Ansprüche 1 bis 21, dadurch gekennzeichnet, daß ein zweites Stanzgitter (9) mit den Sensorkontakten (4.2, 5.2; 54.1, 55.1) des Hallsensors (4, 5; 54, 55) parallel verbunden ist.

23. Drehwinkelsensor nach einem der Ansprüche 1 bis 22, dadurch gekennzeichnet, daß eine erste Gehäuseeinheit (7) aufweist
- eine Gehäusewand (7.1), in die das erste bzw. zweite Stanzgitter (8, 9) eingeformt ist,
- einen Gehäusesensorblock (7.2), der mit der Gehäusewand (7.1) mitgeformt und der so hoch ausgebildet ist, daß die Sensorkontakte (4.1, 5.1) wenigstens teilweise eingeformt sind, und
- Gehäusestatorwände (7.3), die mit der Gehäusewand (7.1) geformt sind, und in die die Stegelemente (11, ...) der Statorsegmente (1, 2) eingeformt sind.

24. Drehwinkelsensor nach einem der Ansprüche 1 bis 23, dadurch gekennzeichnet, daß eine zweite Gehäuseeinheit (57) einen Gehäusekörper (57.1) aufweist, in den die Stegelemente (56.2) der Statorhalbscheiben (51, 52)und das dritte bzw. das vierte Stanzgitter (58, 59) eingeformt sind.

25. Drehwinkelsensor nach einem der Ansprüche 1 bis 24, dadurch gekennzeichnet, daß mit den Stanzgittern (8, 9; 58, 59) die Bauelemente (41, 42; 91, 92) mit in die erste bzw. zweite Gehäuseeinheit (7, 57) mit eingeformt sind

26. Drehwinkelsensor nach einem der Ansprüche 1 bis 25, dadurch gekennzeichnet, daß die erste und die zweite Gehäuseeinheit (7; 57) wenigstens teilweise aus einem magnetisch und/oder elektrisch nicht leitendem Material geformt ist.

27. Drehwinkelsensor nach einem der Ansprüche 1 bis 26, dadurch gekennzeichnet, daß die erste und die zweite Gehäuseeinheit ausgebildet als
- ein Deckelelement (7) eines Sensorgehäuses,
- ein Gehäuse (57) eines Sensorgehäuses,
- ein Deckelelement der Drosselklappenverstelleinrichtung oder
- ein Gehäuse der Drosselklappenverstelleinrichtung.

28. Drehwinkelsensor nach einem der Ansprüche 1 bis 27, dadurch gekennzeichnet, daß ein weiteres Statorsegment vorgesehen ist, das mit wenigstens einem der beiden Statorsegmente (1, 2) verbunden ist.
